# EUROPEAN PATENT SPECIFICATION

(11) **EP 1 415 794 B1**
(45) Date of publication and mention of the grant of the patent: **06.02.2008**
(21) Application number: 02024543.7
(22) Date of filing: 31.10.2002
(51) Int. Cl.: B29C 70/64, B29C 67/24, B29C 45/00, B29C 39/04, B29C 41/04

(54) **Method for manufacturing sanitary articles**
Verfahren zur Herstellung von Sanitärgegenständen
Procédé de fabrication d' articles sanitaires

(43) Date of publication of application: 06.05.2004
(73) Proprietor: Elleci S.p.A., 04014 Pontinia (Latina) (IT)
(72) Inventor: Traversa, Giancarlo, 04019 Terracina (Prov. of Latina) (IT); Traversa, Giorgio Davide, 04019 Terracina (Prov. of Latina) (IT)
(74) Representative: Modiano, Micaela Nadia

(56) References cited:
- EP-A- 0 285 046
- EP-A- 0 361 101
- GB-A- 924 309
- US-A- 5 177 124

## Description

The present invention relates to a method for manufacturing sanitary articles in general and fitted sinks in particular.

As is known, fitted sinks are made of composite material and more specifically by means of a mass that contains a resin that constitutes the matrix and a filler material that is mostly formed by mineral particles.

The filler material constitutes approximately 50-85% by weight of the mass of the mixture that forms the article, and the mineral particles of the material have an unbroken grain shape.

Considering in particular fitted sinks, they have a front side, or visible side, which constitutes the side that is used, and a rear side, which in practice constitutes the region that is not in view.

To optimize the front surface, i.e., the visible surface, for example, patent EP 361101 describes a method that allows to pack the mineral particles of the filler material so as to form a visible face that is more resistant to abrasion.

According to the method proposed for manufacturing sinks and the like of the type described above, the mold is positioned substantially in two positions, i.e., in a first position in which the mold is filled with the mixture constituted by the thermosetting resin and the filler material, and in a second position in which the process of polymerization of the mixture is performed.

In the second position, the mold is orientated so that the surface that corresponds to the front side or visible side is directed downward.

With this type of embodiment, the filler mineral particles are packed by gravity toward the visible surface of the sink, in practice with a total sedimentation of the mineral particles toward the front side; accordingly, one has a front face that is resistant to abrasion, but one also obtains an overall structure of the article that certainly has a structural imbalance, since all the mineral fillers are all packed toward the front side.

This imbalance causes reduced resistance to violent impacts and to thermal shocks produced during use of the sink in the kitchen.

EP 285046 discloses a method for producing a sanitary article comprising the step of obtaining an inner layer of plastic material on a convex mould corresponding to the use side of the article to be produced and on its external side generate an external layer of plastic material, adherent to the inner layer, my means of a concave mould corresponding to the rear part of the article, wherein the convex mould and the concave mould can be rotated together around a horizontal axis.
GB-A-924 309 discloses a method of forming articles of polymerizable plastic composition, which comprises forming a suspension of light reflecting lamellae in a polymerisable plastic composition in liquid form, introducing said suspension into a mould to provide a mass thereof having a free surface, contacting the free surface of the mass with a member having an extended plane surface substantially co-extrusive with said free surface and subjecting said mass to oscillatory motion parallel to the free surface thereof while causing at least partial induration of said plastic composition.
US-A-5 177 124 discloses a method for forming an object of plastic material having a metallic outer face, the method comprising pouring into a mould a mixture of liquid monomer, a curing agent, a dispersion of metal particles and floating particles and permitting the metal particles to settle in the mould to the lower region of the piece or the mould is centrifuged to cause the metal particles to migrate toward the outer region of the piece and concentrate in this region before the monomer polymerizes and hardens to bind the metal particles.

The aim of the present invention is indeed to solve the problem described above by providing a method for producing sanitary articles in general and fitted sinks in particular that leads to the obtainment of an article that has a front face with high abrasion resistance but at the same time, by virtue of an optimum distribution of the mineral particles, has better resistance to impacts and to any other form of external stress.

Within this aim, a particular object of the invention is to provide a method in which the rear face of the article has a high percentage of mineral fillers, avoiding the typical wrinkling of articles in which all the mineral particles are toward the front face and optimizing the structural characteristics of the item as a whole.

Another object of the present invention is to provide a method that by thanks to its particular constructive characteristics is capable of giving the greatest assurances of reliability and safety in use.

Another object of the present invention is to provide a method that can be performed by using a relatively simple and effective molding system.

This aim and these and other objects that will become better apparent hereinafter are achieved by a method for producing sanitary articles in general and fitted sinks in particular, according to the invention, which consists in introducing a fluid mixture of thermosetting resin and mineral particles in the cavity of a mold that forms the shape of the article being produced, said mixture being introduced in such a manner as to achieve removal of the air that is present in said cavity, characterized in that it consists in turning over said mold into a first position, in order to position the front face of the article being produced so that it faces downward; in keeping said mold in said first position while the lower mold part of said mold in contact with said front face is kept at a higher temperature than the upper mold part in contact with said rear face, until a surface layer rich in mineral particles is obtained by sedimentation of said mineral particles towards said mold part in contact with said front face, and has begun to cure on said front face; turning over said mold into a second position, in order to position the rear face of the article being produced so that it faces downward so that the resin not yet cured undergoes sedimentation of the mineral particles towards said mold part in contact with said rear face thereby said mineral particles are dispersed in a substantially uniform manner in said resin and sedimentation in the first position is compensated; and keeping said mold in said second position until the mixture introduced in said cavity is completely cured or in any case for the time required to start the curing of the mixture inside said cavity with blocking of the sedimentation of the mineral particles.

Further characteristics and advantages will become apparent from the description of a preferred but not exclusive embodiment of a method for producing sanitary articles in general and fitted sinks in particular, illustrated only by way of non-limitative example with the aid of the accompanying drawings, wherein:
Figure 1 is a schematic view of the mold in the position for introducing the mixture, said mold being connected in the mold supporting structure;
Figure 2 is a transverse sectional view of the mold arranged in the first position;
Figure 3 is a transverse sectional view of the mold arranged in the second position.

With reference to the figures, the method for producing sanitary articles in general and fitted sinks in particular, according to the invention, consists in providing a mold, generally designated by the reference numeral 1, that is constituted by a lower mold part 2, which in practice corresponds to the front or visible surface of the article being produced, which is constituted for example by a sink; an upper mold part 3 mates with the lower mold part 2 and in practice corresponds to the rear face or hidden side of the sink.

The mold parts 2 and 3 form, between them, a cavity 4 in which it is possible to introduce the fluid mixture of thermosetting resin and mineral particles, which can be for example of the type disclosed in EP-A-1 153 731 of the same Applicant.

The cavity formed inside the mold has a distribution channel 5 that runs perimetrically at the entire article and is connected to a channel, designated by the reference numeral 6, for injecting the material.

The presence of the distribution channel 5 allows to optimize the injection of the mixture without producing particular preferential paths and turbulence inside the cavity.

The cavity 4, moreover, is connected to a main venting channel 7, which is arranged diametrically with respect to the injection channel, and to a secondary venting channel 8, which is present at the upper mold part 3.

To perform the initial step of injecting the fluid mixture of thermosetting resin and filler material containing mineral particles, according to substantially conventional criteria, the mold is arranged so that the injection channel 6 lies at the lowest level and the main venting channel 7 lies at the highest level.

This position normally corresponds to a 110° rotation with respect to the position providing arrangement on the horizontal plane.

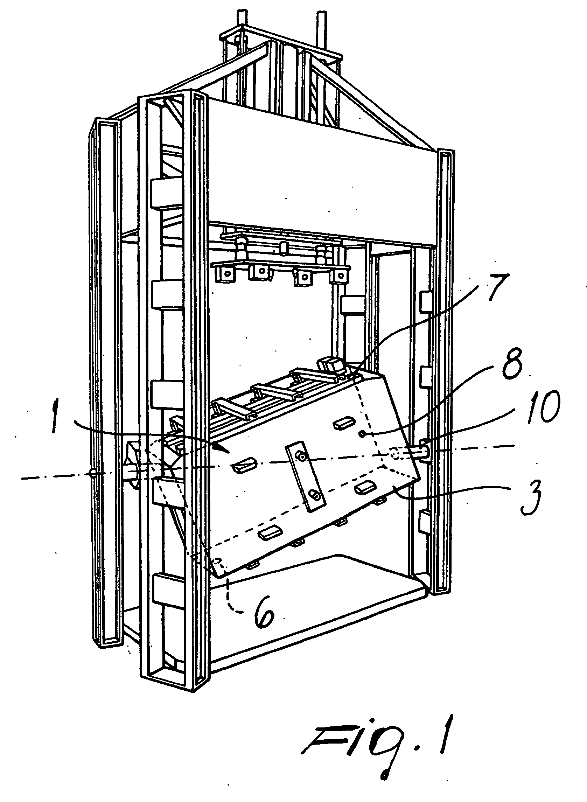

The mold, with reference to Figure 1, can rotate about a main shaft 10 which, assuming the mold to be an element shaped like a parallelepiped, affects diagonally the smaller vertical faces and is substantially parallel to the larger faces.

During the injection of the mixture, the material is forced to flow along the distribution channel 5, filling the cavity completely; as the material fills the cavity, the venting points are closed until the cavity is completely filled.

The described arrangement completely avoids the possibility of trapping air in the fluid mixture of thermosetting resin and mineral particles.

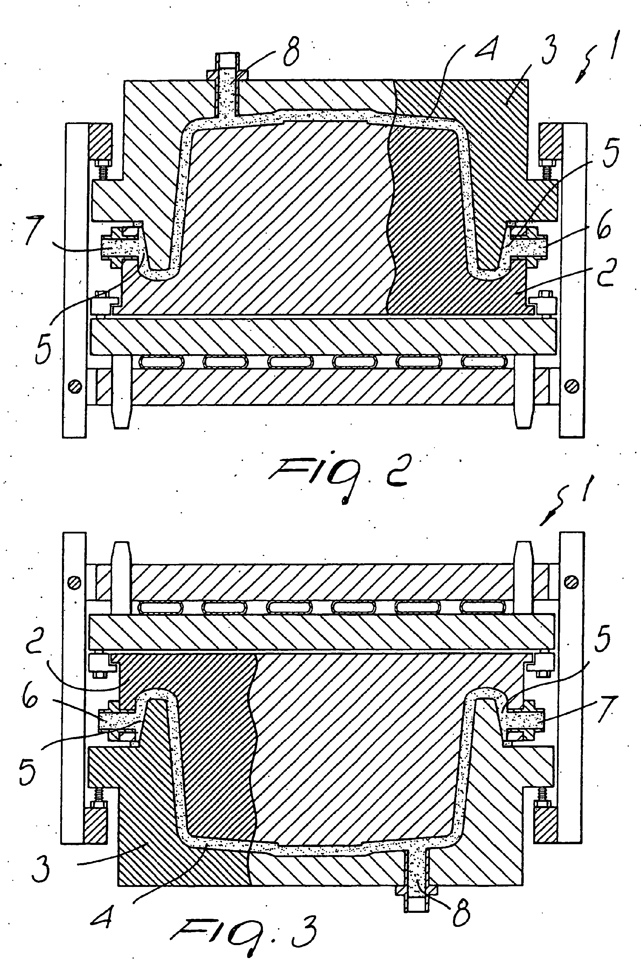

Once filling has been performed, the mold 1 is turned over into a first position, shown schematically in Figure 2, in which the front face of the article, and accordingly the lower mold part 2, are directed downward.

The mold is kept in the first position until a surface layer that has begun to cure is obtained on the front face of the article.

To facilitate this curing, the upper mold part 3 initially has a temperature that is at least 40-55 °C lower than the lower mold part 2; preferably, the initial temperatures are between 75 and 85 °C for the lower mold part and between 30 and 40 °C for the upper mold part.

These temperatures must remain constant at least for 15 to 20 minutes, calculated from the beginning of the thermal cycle.

The thermal cycle must be started immediately as soon as the first position is reached.

The mold is kept in the first position until a surface layer which has begun to cure is obtained at the front face, and the time required is normally approximately 10-15 minutes.

In this position, due to the effect of gravity, the mineral particles tend to precipitate slowly downward, i.e., toward the surface of the lower mold part 2 that corresponds to the visible side of the sink, consequently packing the material until a surface layer rich in mineral particles, preferably on the order of one millimeter thick, is obtained.

Keeping the lower mold part at a higher temperature than the other mold part causes the mixture to begin to cure at the front face of the material, curing gradually more slowly as the distance from the surface of the mold part at the highest temperature increases.

Once said period of 10-15 minutes has elapsed, the first layer of the mixture in contact with the hottest surface of the mold part starts to cure, blocking the sedimentation.

This period allows the mineral particles to pack in sufficient quantities to produce a compact layer of material on the front face or visible side of the sink, so as to obtain good abrasion resistance.

Once this time has elapsed, the mold is turned over through 180° in order to reach a second position, in which the rear face or hidden face of the article being manufactured is directed downward.

The mold is left in this second position until the entire mixture has cured completely, or in any case for the time required for all the mixture inside the cavity to start to cure, thus blocking the sedimentation of the mineral particles.

By rotating the mold through 180°, which in practice produces a full overturning, the part of the mixture that had not cured yet, since polymerization has not yet commenced, due to gravity undergoes a sedimentation of the mineral particles toward the surface of the upper mold part, which is now in the lower region.

In this manner, the mineral particles are distribute in an optimum and substantially uniform manner throughout the mass, before it begins to cure over its entire thickness, thus also compensating the sedimentation that initially occurred in the opposite direction.

It should also be added that during the polymerization step, in a per se known manner, the two mold parts are subjected to a rising closure pressure that optimizes the curing step of the article.

Once the thermal polymerization cycle has been completed, the mold is returned to the first position and is opened to extract the article.

A first visual inspection already allows to note immediately that the visible surface of the article has an excellent surface finish but the rear face also has an adequate packing of mineral particles which, in addition to producing a definitely improved aesthetic effect, provides an article that is considerably more resistant to violent impacts and thermal shocks.

From the above description it is thus evident that the invention achieves the intended aim and objects, and in particular the fact is stressed that a method is provided which, by utilizing the overturning of the mold through 180° from a first position, in which the front face is produced, to a second position, in which the polymerization of the fluid mixture is completed, allows to distribute the mineral fillers in an optimum manner and at will, avoiding the useless and damaging packings that occurred with known solutions, in which the mineral fillers were packed toward the front face, leaving a rear face that was totally devoid of mineral fillers.

The invention thus conceived is susceptible of numerous modifications and variations as defined in the appended claims.

All the details may further be replaced with other technically equivalent elements.

In practice, the materials used, as well as the contingent shapes and the dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for producing sanitary articles in general and fitted sinks in particular, said article having a front face and a rear face, which consists in introducing a fluid mixture of thermosetting resin and mineral particles in the cavity (4) of a mold (1) that forms the shape of the article being produced, the mold having a lower mold part (2) and an upper mold part (3), said mixture being introduced in such a manner as to achieve removal of the air that is present in said cavity, **characterized in that** it comprises the steps of turning over said mold (1) into a first position, in order to position the front face of the article being produced so that it faces downward; keeping said mold (1) in said first position while the lower mold part (2) of said mold is being in contact with said front face and is being kept at a higher temperature than the upper mold part (3) being in contact with said rear face, until a surface layer rich in mineral particles is obtained by sedimentation of said mineral particles towards said lower mold part (2), the resin at the surface layer and has begun to cure; turning over said mold (1) into a second position, in order to position the rear face of the article being produced so that it faces downward so that the resin not yet cured undergoes sedimentation of the mineral particles towards said upper mold part (3) being in contact with said rear face, whereby said mineral particles are dispersed in a substantially uniform manner in said resin and sedimentation in the first position is compensated; and keeping said mold (1) in said second position until the mixture introduced in said cavity is completely cured or in any case for a time required to start curing of the mixture inside said cavity to such a degree, that further sedimentation of the mineral particles is being blocked.

2. The method according to claim 1, **characterised in that** said lower mold part (2) has a temperature that is 40-55 °C higher than said upper mold part (3).

3. The method according to one or more of the preceding claims, **characterized in that** said lower mold part (2) has a temperature between 75 and 85 °C.

4. The method according to one or more of the preceding claims, **characterized in that** said mold (1) is kept in said first position for 10-15 minutes.

5. The method according to one or more of the preceding claims, **characterized in that** said mixture is injected into said cavity (4) by means of an injection channel (6) that is arranged in a downward region, with at least one venting channel (7,8) arranged at the upper level.

6. The method according to one or more of the preceding claims, **characterized in that** it comprises, in said cavity (4), a distribution channel (5) that surrounds perimetrically the article being produced.

7. The method according to one or more of the preceding claims, **characterized in that** during the step for curing said mixture inside said mold, an increasing pressure for mutually closing said mold parts (2,3) is applied.

8. The method according to one or more of the preceding claims, **characterized in that** said mold part is rotated about a shaft that lies substantially parallel to the plane of arrangement of the larger faces of said mold and diagonally to the smaller faces of said mold.

9. A sanitary article in general and a fitted sink in particular, **characterized in that** it is obtained with the method according to the preceding claims.

## Patentansprüche

1. Verfahren zum Erzeugen von Sanitärartikeln im Allgemeinen und von eingebauten Spülbecken im Besonderen, wobei der Artikel eine Vorderseitenfläche und eine Rückseitenfläche hat, welches Verfahren aus einem Einführen einer Fluidmischung aus duroplastischem Harz und Mineralpartikeln in den Hohlraum (4) einer Form (1) besteht, die die Form des Artikels bildet, der erzeugt wird, wobei die Form ein unteres Formteil (2) und ein oberes Formteil (3) hat, wobei die Mischung auf derartige Weise eingeführt wird, um eine Entfernung der Luft, die in dem Hohlraum vorhanden ist, zu erreichen, **dadurch gekennzeichnet, dass** es die folgenden Schritte aufweist: Umdrehen der Form (1) in eine erste Position, um die Vorderseitenfläche des Artikels, der erzeugt wird, so zu positionieren, dass sie in Richtung nach unten gerichtet ist; Halten der Form (1) in der ersten Position, während das untere Formteil (2) der Form in Kontakt mit der Vorderseitenfläche ist und auf einer höheren Temperatur als das obere Formteil (3) gehalten wird, der in Kontakt mit der Rückseitenfläche ist, bis eine Oberflächenschicht, die reich an Mineralpartikeln ist, durch Sedimentierung der Mineralpartikel in Richtung zu dem unteren Formteil (2) erhalten wird und das Harz der Oberflächenschicht begonnen hat auszuhärten; Umdrehen der Form (1) in eine zweite Position, um die Rückseitenfläche des Artikels, der erzeugt wird, so zu positionieren, dass er in Richtung nach unten gerichtet ist, so dass sich das Harz, das noch nicht ausgehärtet ist, einer Sedimentierung der Mineralpartikel in Richtung zu dem oberen Formteil (3) unterzieht, das in Kontakt mit der Rückseitenfläche ist, wodurch die Mineralpartikel im Harz auf eine im Wesentlichen einheitliche Weise verteilt werden und eine Sedimentierung in der ersten Position kompensiert wird; und Halten der Form (1) in der zweiten Position, bis die in den Hohlraum eingeführte Mischung vollständig ausgehärtet ist, oder in jedem Fall für eine Zeit, die dafür erforderlich ist, ein Aushärten der Mischung innerhalb des Hohlraums bis zu einem solchen Ausmaß zu beginnen, dass eine weitere Sedimentierung der Mineralpartikel blockiert wird.

2. Verfahren nach Anspruch 1, **dadurch gekennzeichnet, dass** das untere Formteil (2) eine Temperatur hat, die 40-55°C höher als am oberen Formteil (3) ist.

3. Verfahren nach einem oder mehreren der vorangehenden Ansprüche, **dadurch gekennzeichnet, dass** das untere Formteil (2) eine Temperatur zwischen 75 und 85°C hat.

4. Verfahren nach einem oder mehreren der vorangehenden Ansprüche, **dadurch gekennzeichnet, dass** die Form (1) für 10-15 Minuten in der ersten Position gehalten wird.

5. Verfahren nach einem oder mehreren der vorangehenden Ansprüche, **dadurch gekennzeichnet, dass** die Mischung in den Hohlraum (4) mittels eines Injektionskanals (6) injiziert wird, der in einem abwärtigen Bereich angeordnet ist, während wenigstens ein Lüftungskanal (7, 8) auf einer oberen Ebene angeordnet ist.

6. Verfahren nach einem oder mehreren der vorangehenden Ansprüche, **dadurch gekennzeichnet, dass** es in dem Hohlraum (4) einen Verteilungskanal (5) aufweist, der den Artikel, der erzeugt wird, perimetrisch umgibt.

7. Verfahren nach einem oder mehreren der vorangehenden Ansprüche, **dadurch gekennzeichnet, dass** während des Schritts zum Aushärten der Mischung innerhalb der Form ein größer werdender Druck zum wechselseitigen Schließen der Formteile (2, 3) ausgeübt wird.

8. Verfahren nach einem oder mehreren der vorangehenden Ansprüche, **dadurch gekennzeichnet, dass** das Formteil um eine Welle gedreht wird, die im Wesentlichen parallel zu der Ebene einer Anordnung der größeren Flächen der Form und diagonal zu den kleineren Flächen der Form liegt.

9. Sanitärartikel im Allgemeinen und eingebautes Spülbecken im Besonderen, **dadurch gekennzeichnet, dass** er bzw. es mit dem Verfahren gemäß den voranstehenden Ansprüchen erhalten wird.

## Revendications

1. Procédé pour produire des articles sanitaires en général et des éviers encastrés en particulier, ledit article comportant une face avant et une face arrière, qui consiste à introduire un mélange fluide de résine thermodurcissable et de particules minérales dans la cavité (4) d'un moule (1) qui forme la forme de l'article devant être produit, le moule comportant une partie de moule inférieure (2) et une partie de moule supérieure (3), ledit mélange étant introduit de façon à obtenir un retrait de l'air qui est présent dans ladite cavité, **caractérisé en ce qu'**il comprend les étapes consistant à retourner ledit moule (1) dans une première position, afin de positionner la face avant de l'article qui est produit de telle sorte qu'elle soit dirigée vers le bas ; à maintenir ledit moule (1) dans ladite première position pendant que la partie de moule inférieure (2) dudit moule est en contact avec ladite face avant et est maintenue à une température supérieure à celle de la partie de moule supérieure (3) qui est en contact avec ladite face arrière, jusqu'à ce qu'une couche de surface riche en particules minérales soit obtenue par sédimentation desdites particules minérales vers ladite partie de moule inférieure (2), et que la résine de la couche superficielle ait commencé à durcir; à retourner ledit moule (1) dans une deuxième position, afin de positionner la face arrière de l'article qui est produit de telle sorte qu'elle soit dirigée vers le bas de telle sorte que la résine qui n'a pas encore durci subisse une sédimentation des particules minérales vers ladite partie de moule supérieure (3) qui est en contact avec ladite face arrière, grâce à quoi lesdites particules minérales sont dispersées d'une façon sensiblement uniforme dans ladite résine et la sédimentation dans la première position est compensée; et à maintenir ledit moule (1) dans ladite deuxième position jusqu'à ce que le mélange introduit dans ladite cavité soit complètement durci, ou qu'en tout cas, pendant un temps nécessaire pour démarrer le durcissement du mélange à l'intérieur de la cavité à un tel degré, qu'une plus ample sédimentation des particules minérales soit bloquée.

2. Procédé selon la revendication 1, **caractérisé en ce que** ladite partie de moule inférieure (2) a une température qui est supérieure de 40 à 55° C à celle de ladite partie de moule supérieure (3).

3. Procédé selon l'une ou plusieurs des revendications précédentes, **caractérisé en ce que** ladite partie de moule inférieure (2) a une température comprise entre 75 et 85° C.

4. Procédé selon l'une ou plusieurs des revendications précédentes, **caractérisé en ce que** ledit moule (1) est maintenu dans ladite première position pendant 10 à 15 minutes.

5. Procédé selon l'une ou plusieurs des revendications précédentes, **caractérisé en ce que** ledit mélange est injecté dans ladite cavité (4) à l'aide d'un canal d'injection (6) qui est disposé dans une région basse, avec au moins un canal d'évacuation (7, 8) disposé au niveau supérieur.

6. Procédé selon l'une ou plusieurs des revendications précédentes, **caractérisé en ce qu'**il comprend, dans ladite cavité (4), un canal de distribution (5) qui entoure de façon périphérique l'article qui est produit.

7. Procédé selon l'une ou plusieurs des revendications précédentes, **caractérisé en ce que**, durant l'étape pour durcir ledit mélange à l'intérieur dudit moule, une pression croissante pour fermer mutuellement lesdites parties de moule (2, 3) est appliquée.

8. Procédé selon l'une ou plusieurs des revendications précédentes, **caractérisé en ce que** ladite partie de moule est tournée autour d'un arbre qui se trouve sensiblement parallèle au plan de disposition des plus grandes faces dudit moule et en diagonale par rapport au plus petites faces dudit moule.

9. Article sanitaire en général et évier encastrable en particulier, **caractérisés en ce qu'**ils sont obtenus à l'aide du procédé selon les revendications précédentes.
